# EUROPEAN PATENT SPECIFICATION

(11) **EP 3 514 021 B1**
(45) Date of publication and mention of the grant of the patent: **21.10.2020**
(21) Application number: 19000017.4
(22) Date of filing: 11.01.2019
(51) Int. Cl.: B60R 22/10, A01K 1/02, A44B 11/25

(54) **SEAT BELT CONNECTOR**
SICHERHEITSGURTVERBINDER
CONNECTEUR DE CEINTURE DE SÉCURITÉ

(30) Priority: 22.01.2018 HU 1800024
(43) Date of publication of application: 24.07.2019
(73) Proprietor: Julius-K9 Zrt., 2310 Szigetszentmiklós (HU)
(72) Inventor: Sebö, Gyula, H-2310 Szigetszentmiklós (HU)

(56) References cited:
- DE-A1- 10 204 140
- US-A- 4 674 303
- US-A- 6 041 480
- US-A1- 2006 102 103
- US-A1- 2014 033 991
- US-A1- 2014 305 384
- US-B1- 6 769 157
- US-B1- 6 834 621

## Description

The patent application relates to a seat belt connector for securing pets, primarily dogs in a car, primarily in the back seat in such a way that its connecting member is engaged in a releasable manner in a seat belt buckle housing firmly fixed to the car seat, replacing the adjustable length portion of the seat belt of the car, and fastened directly to the harness of the animal by means of a fastening carabiner, which is connected to the connecting member by at least one adjustable length stalk portion in such a way that the stalk portion is directly fixed together with a cover element touching the connecting member, covering it at least partially. The stalk portion is fixed to the connecting member by passing through a cover element opening.
The width of the cover element extends beyond the release button of the buckle housing, preventing the accidental opening thereof if the dog steps on it, and also keeps it clean from dog fur, etc. At the same time, the cover element can be tilted perpendicularly to the connecting member opening, to allow comfortable access for the user to the release button of the buckle housing. Most preferably, there are two cover element openings passing through the cover element, for threading through the stalk portion and a folded back stalk portion, and there is an intermediate wall portion between the cover element openings, compressed by the stalk portion and the folded back stalk portion as a result of the pulling or tugging forces acting on the stalk portion during normal operation, which intermediate wall portion in the most preferred embodiment elastically contracts and reduces the sudden forces acting on the dog.

The transportation of pets in a car is a daily task. Transportation in a box, a pet carrier box depends on the size of the car and the animal, therefore it offers limited possibilities. The transportation of pets, primarily dogs in the back seat is an accepted practice. Legal regulations, however, refer to the importance of properly securing dogs and the cargo. For dogs the use of a strap device attachable to a dog harness, comprising at one end a fastening carabiner and at the other end a connecting member engaged in a releasable manner in a buckle housing firmly fixed to the car seat, is a practical solution. For safety reasons it is strongly recommended to prevent the dog from jumping into the front seat, disturbing the driver. When animals are transported in a car, the possibility of them jumping out, leaning out through an open window, or escaping when passengers are getting into or out of the car should be excluded. The tugging forces acting on the dog, generated during the normal use of the car in the event of braking, turning, a significant part of which are barely perceptible micro-tuggings, should also be taken into account.
Prior art patents No. US 4674303, entitled "Safety lock for seat belt buckle", No. US 6769157 B1, entitled "Safety guard for seat belt buckle release", and No. US 6041480, entitled "Seat belt lock cover" all provide a solution where a device covers a seat belt receiving buckle firmly fixed to the car seat in order to prevent the accidental opening thereof. The devices comprise a locking portion, and/or the other, adjustable length end of the seat belt needs to be passed through them. They are all made of rigid materials.

Patent application No. US 20140033991 A1, entitled "Leash Latch", relates to a device for securing pets in a car, which is an improvement to an existing retractable leash for walking, leading dogs on a leash, wherein a seat belt tongue is attached to the underside of the spring-loaded automatic retractable leash unit, which can be fastened into a seat belt buckle fixed to the car seat. A disadvantage of the device is that the seat belt buckle fixed to the seat is not covered, that is it does not have a cover element. It does not have any other element to prevent the accidental opening of the seat belt either. The outer cover of the strap or cord is made of a hard, rigid material, which can disturb or injure the dog while travelling. Document US 6 834 621 B1 discloses a seat belt connector according to the preamble of claim 1.

In the prior art the protection of the buckle housing from getting dirty, e.g. from dog fur or mud on the dog, has not been considered as a task to be solved. In the prior art the buckle housing getting dirty has not been considered as a field to be studied. Also, in the prior art the forces generated when securing the cargo or dogs have been studied based on other criteria. All studies have focused on the field of tensile testing involving drastic loads of hundreds of kilograms or thousands of Newtons, or on preventing the secured person from opening the locking mechanism. No research has been made into securing dogs in average traffic situations, or into the presence and study of the hundreds of micro-tuggings acting on the dog every hour. A Hungarian invention disclosed in patent No. 230 567, entitled "Chest harness with an elastic chest strap", deals with the topic of micro-tuggings specifically in the case of dogs, but only with respect to forces acting on the dog while walking and doing sports. There the hand of the dog handler holding the leash acts on the body of the dog and controls the generated forces directly. The elastic element disclosed in the patent is incorporated into the dog harness, and connection to the seat belt of a car is not considered.

It is a task of the invention to eliminate the above shortcomings by fixing a cover element to the stalk portion, partially covering the connecting member engaged in the receiving opening of the buckle housing. The cover element should not prevent the dog from using the back seat of the car properly, its surface should not cause injury to the dog. The material of the cover element should be break-proof and/or elastic. The cover element, unlike the solutions disclosed in the prior art, should partially cover both the buckle housing and the connecting member. The cover element should cover the opening of the buckle housing, thus it should prevent any dirt, unavoidable when transporting animals, from getting into it beside the connecting member. It is also a task to design the edge portion of the cover element like a drip deflector. The stalk portion and the folded back stalk portion threaded through the cover element openings should squeeze a given section of the cover element by forming a loop, which should contract with the load on the stalk portion, reducing the load generated by the pulling and tugging forces on at least one occasion. An aim is to provide an elastic design for the intermediate wall portion, to make the load reducing effect of the contraction repeatable. Another aim is to ensure that the direction of compression of the intermediate wall portion is perpendicular to axis line, thereby the intermediate wall portion is subjected only indirectly to the forces coming from the direction of the fastening carabiner.
Another aim is to reduce the load generated by the pulling and tugging forces acting on the transported animal by a cover element and stalk portion design that ensures the absorption of the load on at least one occasion by means of the compression of a given section of the cover element. Another aim is to provide an elastic design for the cover element, especially the intermediate wall portion, that allows constant and long-term use with regard to the pulling and tugging forces. Another aim is to cover the buckle housing in an appropriate proportion in a way that allows the user to easily access the release button under the cover element, by tilting it in a certain way. Another aim is to ensure that the cover element can be tilted in both directions perpendicular to the tongue opening, to allow access to the release button. Yet another aim is to determine, optimize the elasticity of the intermediate wall portion surrounded by the loop-like design.

The tasks set are implemented by the solution according to the invention.

Thus the invention relates to a seat belt connector for securing pets, primarily dogs in a car, where the seat belt connector comprises a fastening carabiner, an adjustable length stalk portion connected thereto, a slide adjuster ensuring the adjustability of the stalk portion, and a connecting member covered by a cover element.
The main parts of the connecting member are a protruding portion surrounding a connecting member opening, and the protruding portion continues in a tongue plate surrounding a tongue opening.
The cover element is made of an elastic material, has a hemispherical (dome-like) shape, in the upper part of which there are cover element openings, which are parallel to each other and to the connecting member, and the distance of the cover element openings from each other is equal to or larger than the thickness of the connecting member. The lower part of the cover element, which is circular or oval shaped, has an outwardly curved edge portion. The area of the cover element bordered by the cover element openings is the intermediate wall portion.
The cover element is located above the connecting member, covering it partially, in such a way that the lower part of the stalk portion is threaded through one of the cover element openings, the connecting member opening, and then the other cover element opening. The stalk portion starting from the connecting member opening and threaded through the other cover element opening is the folded back stalk portion, which is the continuation of the stalk portion, and is connected to the stalk portion in a stalk portion fixing zone. Thus the stalk portion and the folded back stalk portion form a loop, this is the loop portion. Preferably, the stalk portion and the folded back stalk portion are fixed to each other in the stalk portion fixing zone by sewing.
A buckle housing having a receiving opening and a release button is firmly fixed to the car seat for receiving the connecting member.
The connecting member can be engaged in a releasable manner by means of the tongue opening in the receiving opening. The cover element can be tilted in the direction perpendicular to the tongue opening in a bell-like manner, allowing access to the release button of the buckle housing.

The width of the lower part of the cover element is larger than the width of the buckle housing, and the largest width of the cover element measured perpendicularly to the axis line is larger than the length of the tongue opening of the connecting member measured in the direction of the axis line.
The intermediate wall portion, squeezed by the loop portion as a result of the pulling and tugging forces acting during normal use, is deformed, compressed to an extent depending on the density of the material of the cover element in the direction perpendicular to the axis line, reducing the load acting on the body of the animal due to sudden braking.

The solution according to the invention is shown in the following figures:
- Figure 1: shows the full length of the seat belt ccnnector, showing the main parts thereof, and showing in a local cross-section the elements covered by the cover element, as well as the buckle housing, and the location of the A-A cross section perpendicular to the connecting member.
- Figure 2: shows a top view of a preferred embodiment of the cover element having a circular shape, with the cover element openings running in parallel to each other, and the intermediate wall portion and the fastening carabiner located between the cover element openings.
- Figure 3: shows the A-A cross section of the seat belt connector of Figure 1 perpendicular to the connecting member, that is the connecting member opening, showing the main parts of the cover element on both sides of the axis line, and the connecting member, as well as the main parts of the buckle housing, and the intermediate wall portion.

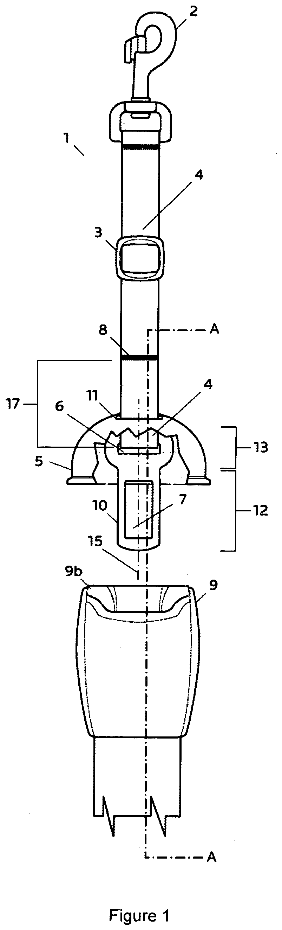

Figure 1 shows the full length of the seat belt connector 1 and the belt or strap-shaped stalk portion 4 thereof, at one end of which there is a fastening carabiner 2, while at the other end there is a cover element 5 arranged symmetrically to the axis line 15, preferably domed in the direction of the fastening carabiner 2. The stalk portion 4 between the fastening carabiner 2 and the cover element 5 is adjustable by a slide adjuster 3.
The stalk portion 4 is threaded through a cover element opening 11 of the cover element 5, and then a connecting member opening 6 in a protruding portion 13 of the connecting member 10, parallel to the cover element opening 11, as shown in the local cross-section. The stalk portion 4 continues in a folded back stalk portion 4a (not shown in this figure) threaded through the other cover element opening 11 and fixed to the stalk portion 4 in a stalk portion fixing zone 8. This way the stalk portion 4 and the folded back stalk portion 4a form a loop portion 17.

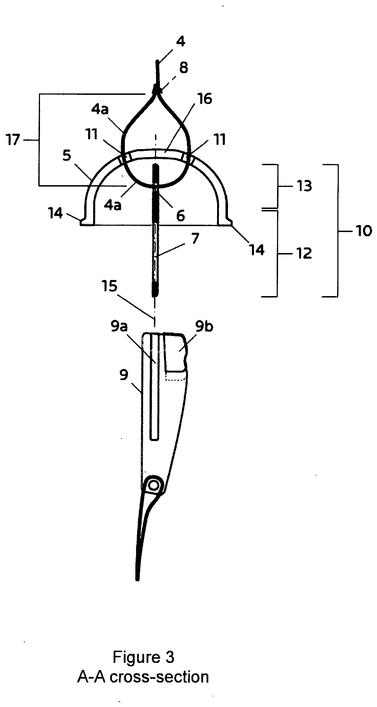

Figure 1 shows a buckle housing 9 designed and firmly fixed to the car seat in a known way, the release button 9b of which, shown in Figure 3, is easily accessible. The stalk portion 4 passing through the cover element opening 11 extends into the connecting member opening 6. The connecting member opening 6 is an opening in the protruding portion 13 of the connecting member 10, running parallel to the cover element opening 11 and having a width suitable for accommodating the stalk portion 4 in a wrinkle-free manner. The cover element opening 11 and the connecting element opening 6 are approximately of the same size. The connecting member 10 continues in a tongue plate 12 extending from the cover element 5 and having a tongue opening 7. The tongue opening 7 is partially covered by the cover element 5. The largest width of the cover element 5 measured perpendicularly to the stalk portion 4 is larger than the tongue opening 7. Figure 1 shows the seat belt connector 1 and the buckle housing 9 having a receiving opening 9a, firmly fixed to the car seat, in an out of use state, removed from each other.

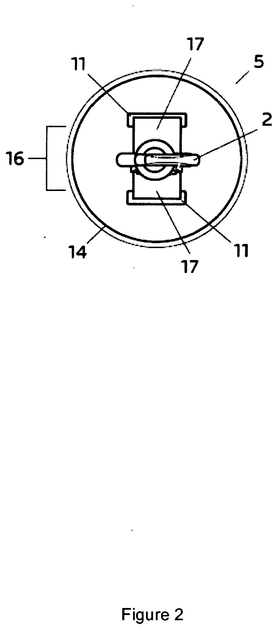

Figure 2 shows a top view of a preferred embodiment of the cover element 5 having a circular shape, with the cover element openings 11 running in parallel to each other, and the intermediate wall portion 16 and the loop portion 17 located between them. It also shows the fastening carabiner 2 located between the cover element openings 11.
The cover element 5 has an edge portion 14 running around the entire circumference thereof, preventing the introduction of water and dirt into the buckle housing 9 of Figure 1. The stalk portion 4 of Figure 1 is not shown in Figure 2, as it is covered by the fastening carabiner 2. The cover element 5 has an edge portion 14.

Figure 3 shows in the A-A cross-section that in the most preferred embodiment the cover element 5 and the connecting member 10 are arranged symmetrically on both sides of the axis line 15. On one side of the axis line 15 the stalk portion 4 passes through one of the cover element openings 11 of the cover element 5 in the direction of the connecting member 10, extends into the connecting member opening 6, passes through it, and continues in the folded back stalk portion 4a. Between the stalk portion fixing zone 8 and the connecting member opening 6 the stalk portion 4 and the folded back stalk portion 4a form a loop portion 17, which surrounds an intermediate wall portion 16 of the cover element 5 on the two sides of the axis line 15. In the most preferred embodiment the intermediate wall portion 16 located between the cover element openings 11 running parallel to each other elastically contracts in the event of heavy braking or a collision. The elastic, rubber or plastic material of the cover element 5 is dimensionally stable elastomer, silicone or caoutchouc. The cover element 5 has an edge portion 14. The tongue opening 7 is engaged in the receiving opening 9a of the buckle housing 9.
In the event of shock-like tugging forces, the elastic cover element 5 can reduce the unpleasant forces acting on the dog through the compression of the intermediate wall portion 16.

The invention is suitable for preventing the accidental opening of the release button when transporting pets in the back seat of a car. The cover element also protects the buckle housing from dirt, fur, etc. The contraction of the intermediate wall portion dampens the micro-tuggings acting on the body of the dog.

### List of reference numbers

- 1.: seat belt connector
- 2.: fastening carabiner
- 3.: slide adjuster
- 4.: stalk portion
- 4a.: folded back stalk portion
- 5.: cover element
- 6.: connecting member opening
- 7.: tongue opening
- 8.: stalk portion fixing zone
- 9.: buckle housing
- 9a.: receiving opening
- 9b.: release button
- 10.: connecting member
- 11.: cover element opening
- 12.: tongue plate
- 13.: protruding portion
- 14.: edge portion
- 15.: axis line
- 16.: intermediate wall portion
- 17.: loop portion

## Claims

1. A seat belt connector for securing pets, primarily dogs in a car, comprising a fastening carabiner (2), an adjustable length stalk portion (4) connected thereto, a slide adjuster (3) ensuring the adjustability of the stalk portion (4), furthermore, a connecting member (10) engageable in a releasable manner by means of a tongue plate (12) and a tongue opening (7) formed therein, extending in the direction of the axis line (15), in a buckle housing (9) equipped with a receiving opening (9a) and a buckle housing release button (9b), firmly fixed to the car seat, the protruding portion (13) of which has at least one connecting member opening (6) accommodating the stalk portion (4), and the stalk portion (4) continues in a folded back stalk portion (4a) fixed to the stalk portion (4) in a stalk portion fixing zone (8), **characterized in that** the seat belt connector (1) has a cover element (5) directly fixed together with the stalk portion (4), comprising at least two cover element openings (11), and the cover element (5) is located between the stalk portion fixing zone (8) and the tongue plate (12) of the connecting member (10), in a manner separating from each other the stalk portion fixing zone (8) and the tongue plate (12), covering the protruding portion (13) on the side towards the stalk portion fixing zone (8), and having a width extending beyond the release button (9b) of the buckle housing (9), furthermore, the stalk portion (4) is threaded through at least one cover element opening (11) in the direction of the tongue opening (7), while on the opposite side of the axis line (15) the folded back stalk portion (4a) passes through the other cover element opening (11) and is fixed to the stalk portion (4) in the stalk portion fixing zone (8), furthermore, the stalk portion (4) and the folded back stalk portion (4a) form a loop portion (17) extending between the connecting member opening (6) and the stalk portion fixing zone (8) in the direction of the axis line (15), surrounding an intermediate wall portion (16) perpendicular to the axis line (15), located between the cover element openings (11), which intermediate wall portion (16), squeezed by the loop portion (17) as a result of the pulling and tugging forces acting during normal use, is compressed to an extent depending on the density of the material of the cover element (5) in the direction perpendicular to the axis line (15).

2. The seat belt connector according to claim 1, **characterized in that** the cover element (5) can be tilted in the direction perpendicular to the tongue opening (7) in a bell-like manner.

3. The seat belt connector according to claim 1, **characterized in that** the cover element (5) is preferably made of elastic material.

4. The seat belt connector according to claim 1, **characterized in that** the distance of the cover element openings (11) from each other is equal to or larger than the thickness of the connecting member (10).

5. The seat belt connector according to claim 1, **characterized in that** the cover element openings (11) are parallel to each other, and parallel also to the tongue opening (7).

6. The seat belt connector according to claim 1, **characterized in that** the largest width of the cover element (5) measured perpendicularly to the axis line (15) is larger than the length of the tongue opening (7) of the connecting member (10) measured in the direction of the axis line (15).

7. The seat belt connector according to any of claims 1-6, **characterized in that** the cover element (5) has a hemispherical shape.

8. The seat belt connector according to any of claims 1-6, **characterized in that** the edge portion (14) of the cover element (5) is outwardly curved.

9. The seat belt connector according to claim 7, **characterized in that** the edge portion (14) of the cover element (5) covers the tongue opening (7) of the tongue plate (12) at least partially.

## Patentansprüche

1. Ein Sicherheitsgurtverbinder zur Fixierung von Tieren, primär von Hunden in Autos, bestehend aus einem Verschlusskarabiner (2), einem damit verbundenen längenverstellbaren Schaftteil (4), einer Schiebevorrichtung (3), die die Einstellbarkeit des Schaftteils (4) gewährleistet, außerdem einem Verbindungselement (10), das mittels einer Zungenplatte (12) je nach Bedarf gelockert eingreifen kann, sowie darin eine Zungenöffnung (7), die sich in Richtung der Achsenlinie (15) erstreckt, in einem Schnallengehäuse (9), das mit einer Aufnahmeöffnung (9a) und einem fest am Autositz befestigten Löseknopf (9b) zum Lösen des Schnallengehäüses ausgestattet ist, dessen überstehender Teil (13) mindestens eine Verbindungselementöffnung (6) zur Anpassung des Schaftteils (4) aufweist, und der Schaftteil (4) setzt sich in einem zurückgefalteten Schaftteil (4a) fort, das am Schaftteil (4) in einer Schaftteilbefestigungszone (8) befestigt ist, **dadurch gekennzeichnet, dass** der Sicherheitsgurtverbinder (1) ein Abdeckelement (5) aufweist, das direkt mit dem Schaftteil (4) verbunden ist, mit mindestens zwei Öffnungen des Abdeckelements (11), und das Abdeckelement (5) zwischen der Schaftteilbefestigungszone (8) und der Zungenplatte (12) des Verbindungselements (10) liegt, in einer Weise, dass die Schaftteilbefestigungszone (8) und die Zungenplatte (12) getrennt werden, dies deckt den überstehenden Teil (13) auf der Seite Richtung Schaftteilbefestigungszone (8) ab und weist eine über den Löseknopf (9b) des Schnallengehäuses (9) hinausgehende Breite auf, ferner wird der Schaftteil (4) durch mindestens eine Öffnung des Abdeckelements (11) Richtung der Zungenöffnung (7) geführt, während auf der gegenüberliegenden Seite der Achsenlinie (15) der zurückgefaltete Schaftteil (4a) durch die andere Öffnung des Abdeckelements (11) hindurchgeht und mit dem Schaftteil (4) in der Schaftteilbefestigungszone (8) fixiert ist, außerdem bilden der Schaftteil (4) und der zurückgefaltete Schaftteil (4a) ein Schlaufenteil (17), das zwischen der Verbindungselementöffnung (6) und der Schaftteilbefestigungszone (8) in Richtung der Achsenlinie (15) liegt und ein dazwischenliegendes Wandteil (16) senkrecht zur Achsenlinie (15) umgibt, das zwischen den Öffnungen des Abdeckelements (11) liegt, wobei das dazwischenliegende Wandteil (16) vom Schlaufenteil (17) infolge der bei normalem Gebrauch wirkenden Zug- und Zerrkräfte zusammengedrückt wird, und in einem Ausmaß gepresst wird, das von der Dichte des Materials des Abdeckelements (5) senkrecht zur Achsenlinie (15) abhängt.

2. Der Sicherheitsgurtverbinder aus Anspruch 1 ist **dadurch gekennzeichnet, dass** das Abdeckelement (5) senkrecht zur Zungenöffnung (7) glockenartig gekippt werden kann.

3. Der Sicherheitsgurtverbinder aus Anspruch 1 ist **dadurch gekennzeichnet, dass** das Abdeckelement (5) bevorzugt aus elastischem Material hergestellt ist.

4. Der Sicherheitsgurtverbinder aus Anspruch 1 ist **dadurch gekennzeichnet, dass** der Abstand zwischen den Öffnungen der Abdeckungselemente (11) zueinander gleich oder größer ist, als die Dicke des Verbindungselements (10).

5. Der Sicherheitsgurtverbinder aus Anspruch 1 ist **dadurch gekennzeichnet, dass** die Öffnungen des Abdeckelements (11) parallel zueinander und parallel zur Zungenöffnung (7) sind.

6. Der Sicherheitsgurtverbinder aus Anspruch 1 ist **dadurch gekennzeichnet, dass** die höchste Weite des Abdeckelements (5), senkrecht zur Achsenlinie (15) gemessen, größer ist, als die Länge der Zungenöffnung (7) des Verbindungsstücks (10), gemessen entlang der Achsenlinie (15).

7. Der Sicherheitsgurtverbinder aus den Ansprüchen 1-6 ist **dadurch gekennzeichnet, dass** das Abdeckelement (5) eine halbkugelförmige Form hat.

8. Der Sicherheitsgurtverbinder aus den Ansprüchen 1-6 ist **dadurch gekennzeichnet, dass** das Randteil (14) des Abdeckungsteils (5) nach außen hin gewölbt ist.

9. Der Sicherheitsgurtverbinder aus Anspruch 7 ist **dadurch gekennzeichnet, dass** das Randteil (14) des Abdeckungsteils (5) die Zungenöffnung (7) der Zungenplatte (12) zumindest teilweise abdeckt.

## Revendications

1. Connecteur de ceinture de sécurité pour attacher des animaux domestiques, principalement des chiens dans la voiture, comprenant un mousqueton de fixation (2), une partie de la laisse (4) de longueur réglable reliée à celui-ci, un dispositif de réglage à glissière (3) assurant l'ajustement de la partie de laisse (4), en outre, un élément de connexion (10) pouvant s'engager de manière amovible au moyen d'une languette (12) et d'une ouverture pour languette (7) formée à l'intérieur, s'étendant dans la direction de la ligne d'axe (15), dans un boîtier de boucle (9) équipé d'une ouverture de réception (9a) et d'un bouton de déverrouillage (9b) de boîtier de boucle, fermement fixés au siège de voiture, dont la partie saillante (13) présente au moins une ouverture d'élément de connexion (6) recevant la partie de laisse (4), et la partie de laisse (4) se poursuit dans une partie de laisse arrière repliée (4a) fixée à la partie de laisse (4) dans une zone de fixation de partie de laisse (8), **caractérisée en ce que** le connecteur de ceinture de sécurité (1) a un élément de recouvrement (5) directement fixé, avec la partie de laisse (4), comprenant au moins deux ouvertures d'élément de recouvrement (11), et l'élément de recouvrement (5) est situé entre la zone de fixation de la partie de laisse (8) et la languette (12) de l'élément de connexion (10), de manière à séparer la zone de fixation de la partie de laisse (8) et la languette (12), recouvrant la partie saillante (13) sur le côté vers la zone de fixation de la partie de laisse (8), et ayant une largeur s'étendant au-delà du bouton de déverrouillage (9b) du boîtier de boucle (9), en outre, la partie de laisse (4) est enfilée dans au moins une ouverture d'élément de recouvrement (11) dans la direction de l'ouverture de languette (7), tandis que sur le côté opposé de la ligne d'axe (15) la partie de laisse repliée sur elle-même (4a) passe à travers l'autre ouverture d'élément de recouvrement (11) et est fixée à la partie de laisse (4) dans la zone de fixation de partie de laisse (8), en outre, la partie de laisse (4) et la partie de laisse repliée sur elle-même (4a) forment une partie de boucle (17) s'étendant entre l'ouverture d'élément de connexion (6) et la zone de fixation de la partie de laisse (8) dans le sens de la ligne d'axe (15), entourant une partie de paroi intermédiaire (16) perpendiculaire à la ligne d'axe (15), située entre les ouvertures d'élément de recouvrement (11), laquelle partie de paroi intermédiaire (16), comprimée par la partie de boucle (17) résultant des forces de traction et de tiraillement agissant pendant l'utilisation normale, est comprimée dans une mesure dépendant de la densité du matériau de l'élément de recouvrement (5) dans la direction perpendiculaire à la ligne d'axe (15).

2. Le connecteur de ceinture de sécurité selon la revendication 1, **caractérisé en ce que** l'élément de recouvrement (5) peut être incliné dans la direction perpendiculaire à l'ouverture de languetté (7) en forme de cloche.

3. Le connecteur de ceinture de sécurité selon la revendication 1, **caractérisé en ce que** l'élément de recouvrement (5) est de préférence en matériau élastique.

4. Le connecteur de ceinture de sécurité selon la revendication 1, **caractérisé en ce que** la distance entre les ouvertures d'élément de recouvrement (11) est égale ou supérieure à l'épaisseur de l'élément de connexion (10).

5. Le connecteur de ceinture de sécurité selon la revendication 1, **caractérisé en ce que** les ouvertures d'élément de recouvrement (11) sont parallèles entre elles et parallèles également à l'ouverture de languette (7).

6. Le connecteur de ceinture de sécurité selon la revendication 1, **caractérisé en ce que** la plus grande largeur de l'élément de recouvrement (5) mesurée perpendiculairement à la ligne d'axe (15) est plus grande que la longueur de l'ouverture de languette (7) de l'élément de connexion (10) mesurée dans la direction de la ligne d'axe (15).

7. Le connecteur de ceinture de sécurité selon toute revendication de 1-6, **caractérisé en ce que** l'élément de recouvrement (5) a une forme hémisphérique.

8. Le connecteur de ceinture de sécurité selon toute revendication de 1-6, **caractérisé en ce que** la partie de bord (14) de l'élémenf de recouvrement (5) est recourbée vers l'extérieur.

9. Le connecteur de ceinture de sécurité selon la revendication 7, **caractérisé en ce que** la partie de bord (14) de l'élément de recouvrement (5) recouvre au moins partiellement l'ouverture de languette (7) de la languette (12).
